# EUROPEAN PATENT APPLICATION

(11) **EP 2 940 655 A1**
(43) Date of publication of application: **04.11.2015**
(21) Application number: 15163679.2
(22) Date of filing: 15.04.2015
(51) Int. Cl.: G06T 5/50

(54) **METHOD AND ELECTRONIC DEVICE FOR IMPLEMENTING REFOCUSING**

(30) Priority: 17.04.2014 CN 201410153998
(71) Applicant: Huawei Technologies Co., Ltd., Longgang District Shenzhen, Guangdong 518129 (CN)
(72) Inventor: Zhou, Junwei, 518129 Shenzhen (CN)
(74) Representative: Körber, Martin Hans

(57) **Abstract**

Embodiments of the present invention disclose a method and electronic device for implementing refocusing, and relate to the field of image processing technologies, so as to reduce costs of implementing refocusing. The method provided in the embodiments of the present invention includes: acquiring at least two images that are of a to-be-photographed object and have different depths of field; acquiring an instruction operation that is performed by a user on a partial area of one of the at least two images; determining a target area according to the instruction operation; acquiring definition of the target area in the at least two images; and generating a target image according to the definition of the target area in the at least two images.

## Description

### TECHNICAL FIELD

The present invention relates to the field of image processing technologies, and in particular, to a method and electronic device for implementing refocusing.

### BACKGROUND

In a photographing process, an ornamental value of a photo can be improved by selecting a suitable focus point. At present, a manner of selecting a focus point includes: a common focusing manner and a refocusing manner. The common focusing manner is that a focus point is determined in the photographing process, and may specifically include: automatic focus, manual focus, multiple focus, and the like; and the refocusing manner is that a focus point is determined after photographing, that is, photographing is performed first and focusing is performed later.

At present, a method for implementing refocusing mainly includes: acquiring depth information of each pixel in a photo; and according to the depth information, performing blurring processing on an area with different depth information by using a software algorithm, so as to implement the refocusing. In conventional technologies, a parallax between camera groups may be used to calculate the depth information, or a laser/infrared measuring device may be used to acquire the depth information. That is, multiple cameras need or the laser/infrared measuring device needs to be configured to obtain the depth information, which inevitably causing a problem of high costs of implementing the refocusing.

### SUMMARY

Embodiments of the present invention provide a method and electronic device for implementing refocusing, which can reduce costs of implementing the refocusing.

To achieve the foregoing objective, the following technical solutions are used in the embodiments of the present invention:
According to a first aspect, a method for implementing refocusing is provided, where the method is applied to an electronic device and includes:
   acquiring at least two images that are of a to-be-photographed object and have different depths of field;
   acquiring an instruction operation that is performed by a user on a partial area of one of the at least two images;
   determining a target area according to the instruction operation;
   acquiring definition of the target area in each of the at least two images; and
   generating a target image according to the definition of the target area in each of the at least two images.

With reference to the first aspect, in a first possible implementation manner, the generating a target image according to the definition of the target area in each of the at least two images includes:
acquiring, from the at least two images, K images with the target area whose definition meets a predetermined condition, wherein K≥1, and K is an integer, and the predetermined condition is any one of the following: the definition is greater than or equal to a first threshold, the definition is less than or equal to a second threshold, and the definition falls within a preset value range;
when K=1, using an image that meets the predetermined condition as the target image; and when K>1, synthesizing K images that meet the predetermined condition to generate the target image.

With reference to the first possible implementation manner of the first aspect, in a second possible implementation manner, when K=1, before the generating a target image according to the definition of the target area in each of the at least two images, the method further includes:
acquiring a refocusing mode, where the refocusing mode includes: a clear refocusing mode or a blurred refocusing mode, where the clear refocusing mode is configured to instruct the electronic device to generate the target image according to an image whose target area has highest definition among the at least two images, and the blurred refocusing mode is configured to instruct the electronic device to generate the target image according to an image whose target area has lowest definition among the at least two images; and
the generating a target image according to the definition of the target area in each of the at least two images includes:
   generating the target image according to the refocusing mode and the definition of the target area in each of the at least two images.

With reference to the first aspect and any one of the first possible implementation manner or the second possible implementation manner of the first aspect, in a third possible implementation manner, the determining a target area according to the instruction operation includes:
using an area on which the instruction operation is performed as the target area; or
when an area on which the instruction operation is performed is a face area, using the face area as the target area; or
using an area in which a point is a center as the target area, where the point is in an area on which the instruction operation is performed.

With reference to the first aspect, in a fourth possible implementation manner, before the acquiring at least two images that are of a to-be-photographed object and have different depths of field, the method further includes:
acquiring a depth-of-field range that is issued by the user and of the to-be-photographed object; and
the acquiring at least two images that are of a to-be-photographed object and have different depths of field includes:
   acquiring, within the depth-of-field range, the at least two images that are of a to-be-photographed object and have different depths of field.

With reference to the fourth possible implementation manner of the first aspect, in a fifth possible implementation manner, before the acquiring a depth-of-field range that is issued by the user and of the to-be-photographed object, the method further includes:
collecting in real time a reference image that includes the to-be-photographed object; and
the acquiring a depth-of-field range that is issued by the user and of the to-be-photographed object includes:
   acquiring at least two focus points that are issued by the user and included in the reference image; and
   acquiring a depth-of-field range that covers an object corresponding to the at least two focus points.

With reference to the first aspect and any one of the first possible implementation manner to the fifth possible implementation manner of the first aspect, in a sixth possible implementation manner, before the acquiring an instruction operation that is performed by a user on a partial area of one of the at least two images, the method further includes:
performing global registration on the at least two images.

According to a second aspect, an electronic device for implementing refocusing is provided, where the electronic device includes:
an image acquiring unit, configured to acquire at least two images that are of a to-be-photographed object and have different depths of field;
an instruction operation acquiring unit, configured to acquire an instruction operation that is performed by a user on a partial area of one of the at least two images;
a determining unit, configured to determine a target area according to the instruction operation;
a definition acquiring unit, configured to acquire definition of the target area in each of the at least two images; and
a generating unit, configured to generate a target image according to the definition of the target area in each of the at least two images.

With reference to the second aspect, in a first possible implementation manner, the generating unit is specifically configured to:
acquire, from the at least two images, K images with the target area whose definition meets a predetermined condition, wherein K≥1, and K is an integer, and the predetermined condition is any one of the following: the definition is greater than or equal to a first threshold, the definition is less than or equal to a second threshold, and the definition falls within a preset value range;
when K=1, use an image that meets the predetermined condition as the target image; and when K>1, synthesize K images that meet the predetermined condition to generate the target image.

With reference to the first possible implementation manner of the second aspect, in a second possible implementation manner, when K=1, the electronic device further includes:
a mode acquiring unit, configured to acquire a refocusing mode, where the refocusing mode includes: a clear refocusing mode or a blurred refocusing mode, where the clear refocusing mode is configured to instruct the electronic device to generate the target image according to an image whose target area has highest definition among the at least two images, and the blurred refocusing mode is configured to instruct the electronic device to generate the target image according to an image whose target area has lowest definition among the at least two images;
where the generating unit is specifically configured to generate the target image according to the refocusing mode and the definition of the target area in each of the at least two images.

With reference to the second aspect and any one of the first possible implementation manner or the second possible implementation manner of the second aspect, in a third possible implementation manner, the determining unit is specifically configured to:
use an area on which the instruction operation is performed as the target area; or
when an area on which the instruction operation is performed is a face area, use the face area as the target area; or
use an area in which a point is a center as the target area, where the point is in an area on which the instruction operation is performed.

With reference to the second aspect, in a fourth possible implementation manner, the electronic further includes:
a depth-of-field range acquiring unit, configured to acquire a depth-of-field range that is issued by the user and of the to-be-photographed object;
where the image acquiring unit is specifically configured to acquire, within the depth-of-field range, the at least two images that are of a to-be-photographed object and have different depths of field.

With reference to the fourth possible implementation manner of the second aspect, in a fifth possible implementation manner, the image acquiring unit is further configured to collect in real time a reference image that includes the to-be-photographed object; and
the depth-of-field range acquiring unit is specifically configured to acquire at least two focus points that are issued by the user and included in the reference image; and acquire a depth-of-field range that covers an object corresponding to the at least two focus points.

With reference to the second aspect and any one of the first possible implementation manner to the fifth possible implementation manner of the second aspect, in a sixth possible implementation manner, the electronic further includes:
a global registration unit, configured to perform global registration on the at least two images.

In a method and electronic device for implementing refocusing according to embodiments of the present invention, the electronic device implements refocusing according to definition of a target area (that is, a refocusing area) in each of at least two images that are of a to-be-photographed object and have different depths of field. In this way, the electronic device may implement the refocusing without configuring multiple cameras or a laser/infrared measuring device, thereby reducing costs of implementing the refocusing compared with the prior art.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for implementing refocusing according to an embodiment of the present invention;
FIG. 2 is a schematic flowchart of another method for implementing refocusing according to an embodiment of the present invention;
FIG. 3 is a schematic flowchart of another method for implementing refocusing according to an embodiment of the present invention;
FIG. 4 is a structural block diagram of an electronic device for implementing refocusing according to an embodiment of the present invention;
FIG. 5 is a structural block diagram of another electronic device for implementing refocusing according to an embodiment of the present invention; and
FIG. 6 is a structural block diagram of another electronic device for implementing refocusing according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

It should be noted that, the term "and/or" in this specification describes only an association relationship for describing associated objects and represents that three relationships may exist. For example, A and/or B may represent the following three cases: Only A exists, both A and B exist, and only B exists. The character "/" in this specification generally indicates an "or" relationship between the associated objects. In addition, in a case in which "multiple" is not specifically explained, the term "multiple" in this specification indicates two or more than two.

### Embodiment 1

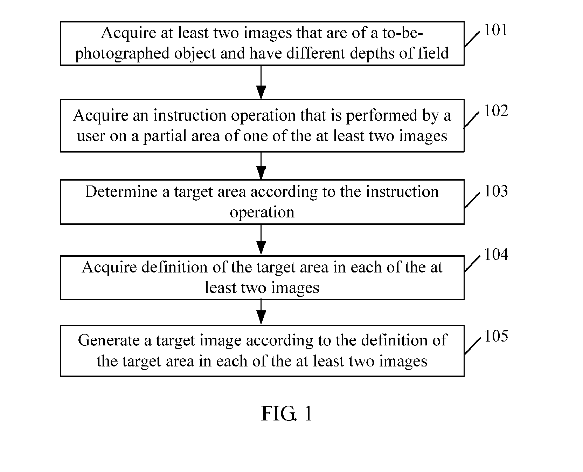

FIG. 1 shows a method for implementing refocusing according to an embodiment of the present invention, where the method is applied to an electronic device and includes:
101. Acquire at least two images that are of a to-be-photographed object and have different depths of field.
   An "electronic device" refers to a device that can be used for photographing, such as a camera, a smartphone, a mobile computer, a tablet, a PDA (Personal Digital Assistant). The electronic device may include a camera, and specifically the camera may be a single camera. The electronic device is used to acquire an image of the to-be-photographed object.
   In this embodiment of the present invention, a method for acquiring images that have different depths of field by the electronic device is not limited. Specifically, the images that have different depths of field may be acquired by adjusting a position of a camera lens or a position of an image sensor in the camera. For example, a motor included in the electronic device is used to control a moving position of the camera lens, and in the control process, the at least two images of the to-be-photographed are acquired. In this embodiment of the present invention, a spacing size and a moving direction (includes forward moving and backward moving) in each moving of the camera lens are not limited.
   To meet requirements for different users and enhance user experience, optionally, before step 101, the method may further include: Step A: Acquire a depth-of-field range that is issued by the user and of the to-be-photographed object. In this case, step 101 may include: acquiring, within the depth-of-field range, at least two images that are of a to-be-photographed object and have different depths of field. A depth of field of each of the "at least two images" falls within the "depth-of-field range". It should be noted that, in specific implementation, the electronic device may divide the "depth-of-field range" that is issued by the user into several subsets, and each subset is a depth of field, so that an image in each depth of field is acquired.
   Exemplarily, in this embodiment of the present invention, an implementation manner of step A is not limited. Two optional manners are listed as follows:
   Manner 1: Before step A, the method may further include: collecting in real time a reference image that includes the to-be-photographed object. In this case, step A may include: acquiring at least two focus points that are issued by the user and included in the reference image; and acquiring a depth-of-field range that covers an object corresponding to the at least two focus points, where, a "focus point" refers to an area that is in the image and is corresponding to an object on which the user desires to implement refocusing. The "depth-of-field range that covers an object corresponding to the at least two focus points" may be a depth of field between an object that is closest to the lens and an object that is farthest from the lens among objects corresponding to the at least two focus points.
   Manner 2: One or more depth-of-field modes are prestored in the electronic device, and each depth-of-field mode corresponds to one depth-of-field range. In this case, step A may include: The electronic device acquires a target depth-of-field mode that is issued by the user, acquires a depth-of-field range that is corresponding to the target depth-of-field mode, and uses the depth-of-field range that is corresponding to the target depth-of-field mode as the depth-of-field range of the to-be-photographed object. For a description about the "depth-of-field mode", refer to Embodiment 2.
102. Acquire an instruction operation that is performed by a user on a partial area of one of the at least two images.
   Exemplarily, the "one of the at least two images" may be any one of the at least two images. The "partial area" refers to an area on which the user directly or indirectly instructs the electronic device to perform the instruction operation. The "instruction operation" may be an operation that is performed by the user on a display unit (that is, a screen) of the electronic device, such as clicking/double-clicking/pressing and holding, and may also be a line-of-sight that is of the user and on the display unit of the electronic device. In a scenario in which the "instruction operation is a line-of-sight that is of the user and on the display unit of the electronic device", an eye tracking unit may also be configured in the electronic device, where the eye tracking unit may capture a direction of the user's line-of-sight and a position, on which the line-of-sight falls, on the screen.
   In specific implementation, the user may issue multiple instruction operations to the electronic device, and areas on which different instruction operations are performed may partially overlap or not overlap. "Areas on which different instruction operations are performed do not overlap" is used for description in the following embodiment.
   Step 102 may be specifically implemented as follows: The electronic device displays any one of the at least two images on the display unit of the electronic device, and the user performs the instruction operation on the partial area of the displayed image.
103. Determine a target area according to the instruction operation.
   Exemplarily, the "target area" refers to an area range in the image. Generally, each of the "at least two images" includes the target area. Because different images have different depths of field of, definition of the target area included in each of the different images is different. Each instruction operation corresponds to one target area, and target areas corresponding to different instruction operations may partially overlap and may also not overlap. "Target areas corresponding to different instruction operations do not overlap" is used for description in the following embodiment. When the number of target areas is one, this embodiment of the present invention is used to implement single point refocusing; and when the number of target areas is at least two, this embodiment of the present invention is used to implement multipoint refocusing.
   Step 103 may specifically include: using an area on which the instruction operation is performed as the target area; or when an area on which the instruction operation is performed is a face area, using the face area as the target area; or using an area in which a point is a center as the target area, where the point is in an area on which the instruction operation is performed. Exemplarily, step 103 may further include: when the area on which the instruction operation is performed is an area of another object other than the face area, using the area occupied by the another object as the target area.
   To keep an imaging proposition, a coordinate position, and the like of each of the "at least two images" consistent so as to determine a target area in each image, optionally, before step 102, the method may further include: performing global registration on the at least two images.
104: Acquire definition of the target area in each of the at least two images.
   Exemplarily, step 104 may be specifically implemented as follows: A target area in each of the at least two images is determined; and definition of the target area in each image is acquired. In this embodiment of the present invention, a specific implementation method for acquiring the definition of the target area is not limited, and any one of methods in the prior art may be used for implementation.
105: Generate a target image according to the definition of the target area in each of the at least two images.

Optionally, step 105 may include: acquiring, from the at least two images, K images with the target area whose definition meets a predetermined condition, where K≥1, and K is an integer, and the predetermined condition is any one of the following: the definition is greater than or equal to a first threshold, the definition is less than or equal to a second threshold, and the definition falls within a preset value range; when K=1, using an image that meets the predetermined condition as the target image; and when K>1, synthesizing K images that meet the predetermined condition to generate the target image.

Further, optionally, when K=1, before step 105, the method may further include: acquiring a refocusing mode, where the refocusing mode includes: a clear refocusing mode or a blurred refocusing mode, where the clear refocusing mode is configured to instruct the electronic device to generate the target image according to an image whose target area has highest definition among the at least two images, and the blurred refocusing mode is configured to instruct the electronic device to generate the target image according to an image whose target area has lowest definition among the at least two images. In this case, step 105 may include: generating the target image according to the refocusing mode and the definition of the target area in each of the at least two images.

Optionally, after step 105, the method may further include: displaying the target image and/or saving the target image. The electronic device may automatically display and save the target image, and may also automatically display the target image, and save the target image under a user instruction. In addition, the method may further include: receiving a performance indicator that is issued by the user, such as resolution, and of the target image, so that the electronic device generates the target image to meet a personalized requirement of the user.

In a method for implementing refocusing according to this embodiment of the present invention, an electronic device implements the refocusing according to definition of a target area (that is, a refocusing area) in each of at least two images that are of a to-be-photographed object and have different depths of field. In this way, the electronic device may implement the refocusing without configuring multiple cameras or a laser/infrared measuring device, thereby reducing costs of implementing the refocusing, as compared with the prior art.

### Embodiment 2

In this embodiment, areas on which different instruction operations are performed do not overlap and target areas corresponding to different instruction operations do not overlap.

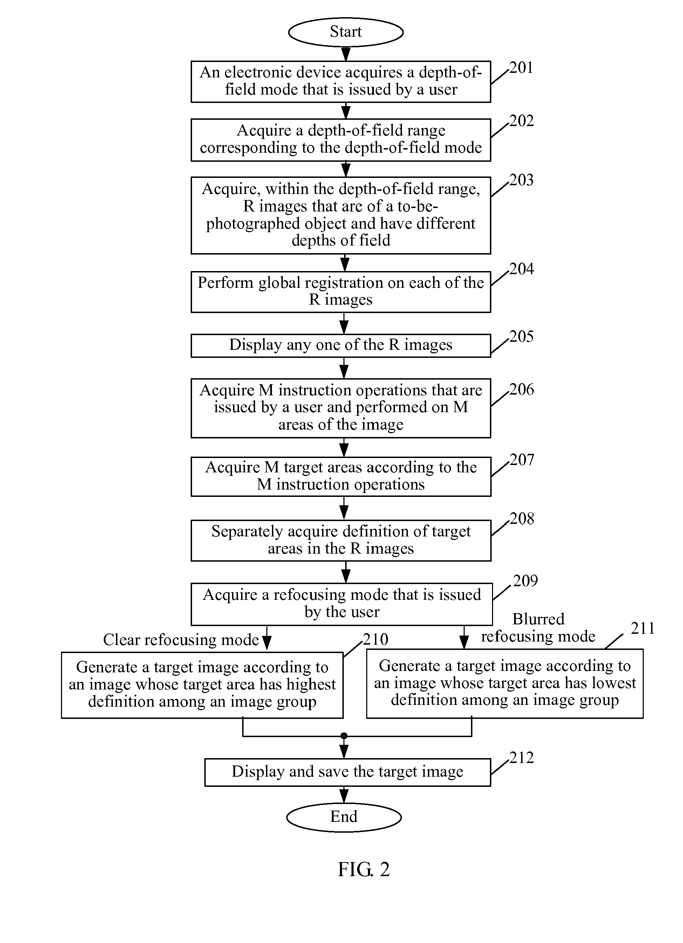

FIG. 2 shows a method for implementing refocusing according to an embodiment of the present invention, where the method includes:
201: An electronic device acquires a depth-of-field mode that is issued by a user, where the depth-of-field mode includes: a full focus mode, a macro mode, a portrait and landscape mode, or the like.
Exemplarily, in this embodiment, a preset depth-of-field mode in the electronic device includes: the full focus mode, the macro mode, and the portrait and landscape mode. In specific implementation, the depth-of-field mode may also include another mode, or may include only one or more of the foregoing modes.
Step 201 may be implemented as follows: The electronic device displays a floating function bar on the screen, where the floating function bar includes a full focus mode tab, a macro mode tab, a portrait and landscape mode tab, and the like; and the user triggers a foregoing tab to enable the electronic device to acquire the depth-of-field mode that is issued by the user.
Optionally, step 201 may be replaced with the following: The electronic device acquires a default depth-of-field mode.
202. Acquire a depth-of-field range corresponding to the depth-of-field mode. Specifically:
(1) When the depth-of-field mode acquired in step 201 is the full focus mode, the "depth-of-field range corresponding to the depth-of-field mode" in step 202 may be a depth of field within 0-an infinite range (that is, full depth of field).
(2) When the depth-of-field mode acquired in step 201 is the macro mode, the "depth-of-field range corresponding to the depth of field mode" in step 202 may be a depth of field within a macro range. In this case, it is suitable to photograph a close up of a small object (such as a small potted landscape and a small toy). The macro range may be 0-50cm, and certainly may also be another value range.
(3) When the depth-of-field mode acquired in step 201 is the portrait and landscape mode, the "depth-of-field range corresponding to the depth-of-field mode" in step 202 may be a depth-of-field that covers a portrait and landscape range. In this case, it is suitable to photograph a portrait and landscape. The portrait and landscape range may be 50cm-infinite, and certainly may also be another value range.
The user may obtain an image that has a different ornamental effect by selecting a different depth-of-field mode, thereby meeting a personalized requirement of the user. In addition, the user appropriately selects the depth-of-field mode according to the to-be-photographed object, so that a problem that a redundant image is included in R images acquired in step 203 may be effectively avoided, where the redundant image refers to that there is no to-be-photographed object within a depth of field. For example, the depth-of-field range is 0-infinite, but there is no to-be-photographed object within the depth of field range 0-50cm. In this case, the image that is acquired by the electronic device and has the depth of field is the redundant image. In this case, the user may select the depth-of-field mode as the portrait and landscape mode.
203. Acquire, within the depth-of-field range, R images that are of a to-be-photographed object and have different depths of field, where R is an integer, and R≥2.
204. Perform global registration on each of the R images.
Exemplarily, the electronic device may use any one of global registration schemes in the prior art to perform the global registration on images in an image group. After step 204 is performed, an imaging proposition of each of the R images is consistent, and coordinates of a point in a same position of each image are same. For example, coordinates of a central point in each of the R images are same, coordinates of an upper-left vertex in each of the R images are same, coordinates of an upper-right vertex in each of the R images are same, and the like.
205: Display any one of the R images.
206: Acquire M instruction operations that are issued by a user and performed on M areas of the image, where M is an integer, and M≥1.
Exemplarily, in this process, the user may browse an image displayed on the electronic device in a zoom browsing manner to accurately locate an area on which an instruction operation is performed. The zoom browsing manner may refer to the prior art.
207. Acquire M target areas according to the M instruction operations.
Exemplarily, in this embodiment, the M target areas are marked as a target area 1, a target area 2,..., a target area i,..., and a target area M; where 1≤i≤M, and i is an integer.
Optionally, step 207 may be specifically implemented in the following manner:
207.1. Sequentially detect whether an area on which an i^{th} instruction operation in the M instruction operations is performed is a face area.
If yes, step 207.2 is performed; and if no, step 207.3 is performed.
207.2. Use the face area as the i^{th} target area.
207.3. Use an area in which a point is a center as the i^{th} target area, where the point is in an area on which the i^{th} instruction operation is performed. In this case, a size of the target area may be 16×16 pixels, and certainly may also be another value.
It should be noted that, the electronic device may provide a tab for the user to choose to enable/disable a facial recognition mode, where the tab may be arranged in the "floating function bar" mentioned in step 201, may also independently be arranged in a display interface, and certainly may also be arranged in another manner. The user may choose to enable or disable the facial recognition mode as required. For example, when the to-be-photographed object includes a face, choose to enable the facial recognition mode, so as to improve refocusing accuracy of the electronic device; when the to-be-photographed object does not include a face, choose to disable the facial recognition mode, so as to shorten time required for the electronic device to implement refocusing. The electronic device may enable the facial recognition mode in default, and this case is used as an example for description in this embodiment.
208. Separately acquire definition of target areas included in the R images.
Exemplarily, each of the R images includes the target area 1, the target area 2,..., the target area i,..., and the target area M, and the R images include M×R target areas in total. The target area i included in an r^{th} image is represented as a target area ir, where 1≤r≤R, and r is an integer. The M×R target areas included in the R images are listed in Table 1:

**Table 1**

| **Target areas in one image** | **Target areas includes in R images** |
|---|---|
| Target area 1 | Target area 11, Target area 12,..., Target area 1R |
| Target area 2 | Target area 21, Target area 22,..., Target area 2R |
| ...... | ...... |
| Target area i | Target area i1, Target area i2,..., Target area iR |
| ...... | ...... |
| Target area M | Target area M1, Target area M2,..., Target area MR |

It is assumed that a position of the target area 1 in the image displayed in step 205 is the target area 1 (x1, y1), where X₁₁≤x1≤X₁₂, and Y₁₁≤y1≤Y₁₂. Because coordinates of a point in a same position in each of the R images are same, the position of the target area 1 in another R-1 image also is (x1, y1). That is, a position of the target area i1 in an i^{th} image also is (x1, y1).
It should be noted that, if the image displayed in step 205 is a b^{th} image in an image group, the target area ib and the target area i indicate a same area in the same image.
209. Acquire a refocusing mode that is issued by the user, where the refocusing mode includes a clear refocusing mode and a blurred refocusing mode.
When the acquired refocusing mode is the clear refocusing mode, step 210 is performed; when the acquired refocusing mode is the blurred refocusing mode, step 211 is performed.
Exemplarily, step 209 may be implemented as follows: The electronic device provides a clear refocusing mode tab and a blurred refocusing mode tab for the user, where these tabs may be arranged in the "floating function bar" mentioned in step 201, may also independently be arranged in a display interface, and certainly may also be arranged in another manner. The user may select the clear refocusing mode or the blurred refocusing mode as required.
It should be noted that, step 209 and step 201 may be performed at the same time. That is, in step 201, the electronic device acquires both the depth-of-field mode and the refocusing mode.
210. Generate a target image according to an image whose target area has highest definition among each group of corresponding target areas in the R images.
Target areas included in each row from a second row in a second column in Table 1 are a group of "corresponding areas". From Table 1, it may be learnt that there are M groups of the corresponding areas in total in this embodiment.
Step 210 may include: separately acquiring an image whose target area has highest definition among each group of corresponding targets areas; when the obtained images are a same image, using the image as the target image; and when the obtained images are not the same image, synthesizing these images to generate the target image. The image synthesis may be implemented in any one of manners in the prior art.
For example, if images whose target areas have highest definition among M groups of corresponding target areas are respectively a target area 1b, a target area 2b,..., and a target area Mb, a b^{th} image in the R images is used as the target image.
For another example, if images whose target areas have highest definition among M groups of corresponding target areas are respectively a target area 11, a target area 23, a target area 33, a target area 46,..., and a target area Mb, the 1^{st}, 3^{rd}, 6^{th},...b^{th} in the R images are synthesized to generate the target image.
After step 210 is performed, step 212 is performed.
211. Generate the target image according to an image whose target area has lowest definition among each group of corresponding target areas in the R images.
It should be noted that a person skilled in the art should be able to deduce a specific implementation manner of step 211 according to a specific implementation manner of the foregoing step 210.
212. Display and save the target image.
After step 212 is performed, the refocusing process ends.

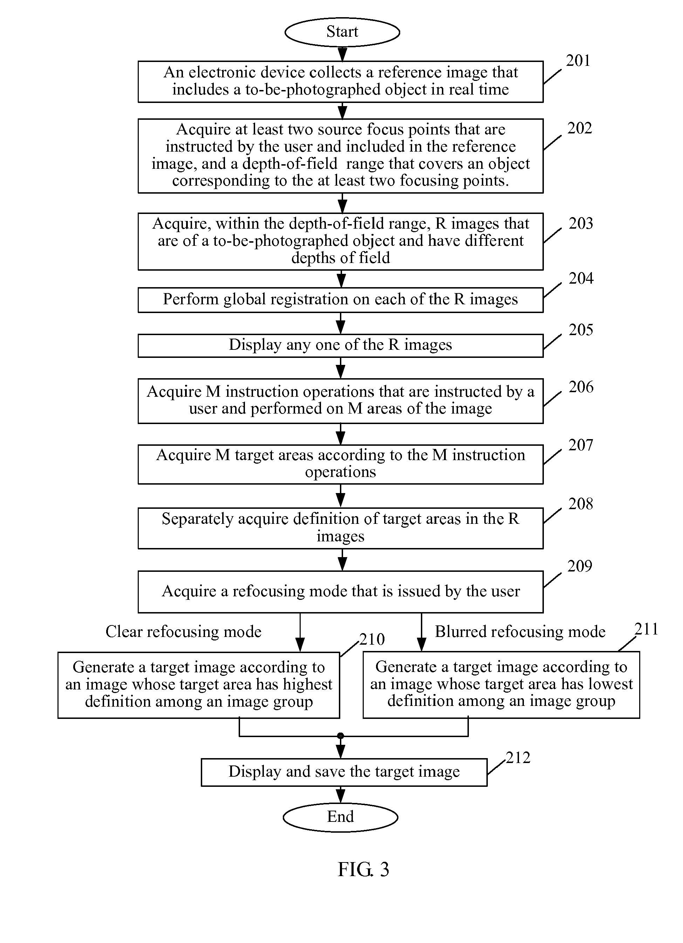

Optionally, as shown in FIG. 3, steps 201 to 202 may be replaced with the following steps:
201'. The electronic device collects in real time a reference image that includes the to-be-photographed object.
   Exemplarily, the image may be one of the foregoing "R images" and may also not be one of the foregoing "R images".
202'. Acquire at least two source focus points that are issued by the user and included in the reference image and a depth-of-field range that covers an object corresponding to the at least two focus points.
   In a method for implementing refocusing according to this embodiment of the present invention, an electronic device acquires a depth-of-field range that is issued by a user, so that definition of a target area (that is, a refocusing area) in each of at least two images that have different depths of field within the depth-of-field range is acquired to implement refocusing. In this way, the electronic device may implement the refocusing without configuring multiple cameras or a laser/infrared measuring device, thereby reducing costs of implementing the refocusing, as compared with the prior art. In addition, a depth-of-field mode that is issued by the user is acquired and a depth-of-field range corresponding to the depth-of-field mode is acquired to meet a personalized requirement for the user, thereby enhancing user experience.

### Embodiment 3

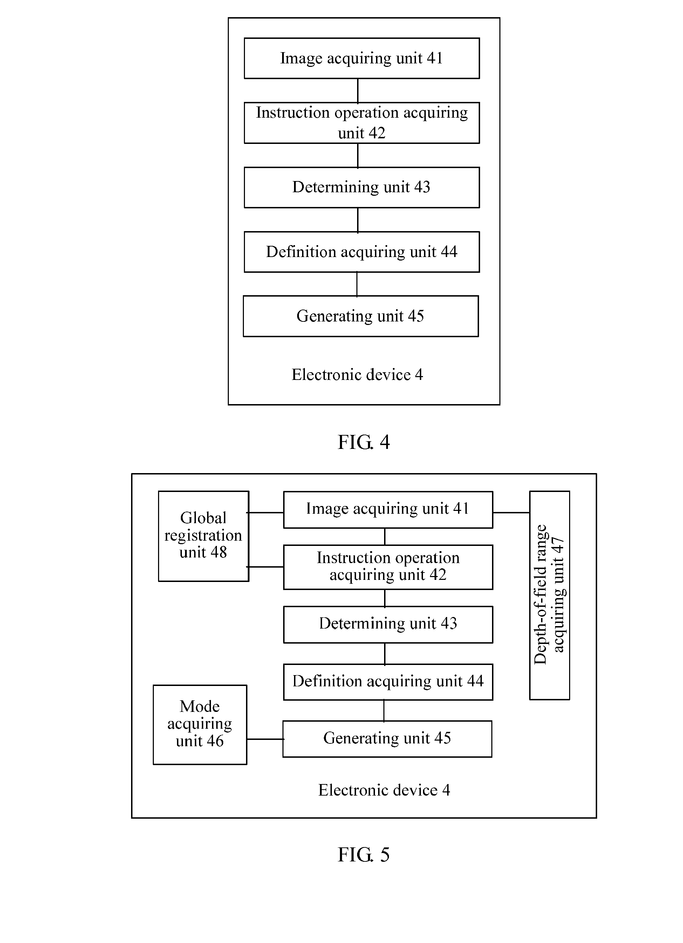

FIG. 4 shows an electronic device 4 for implementing refocusing according to an embodiment of the present invention, where the electronic device 4 is configured to execute the method for implementing refocusing shown in FIG. 1 and includes:
an image acquiring unit 41, configured to acquire at least two images that are of a to-be-photographed object and have different depths of field;
an instruction operation acquiring unit 42, configured to acquire an instruction operation that is performed by a user on a partial area of one of the at least two images;
a determining unit 43, configured to determine a target area according to the instruction operation;
a definition acquiring unit 44, configured to acquire definition of the target area in each of the at least two images; and
a generating unit 45, configured to generate a target image according to the definition of the target area in each of the at least two images.

Optionally, the generating unit 45 is specifically configured to:
acquire, from the at least two images, K images with the target area whose definition meets a predetermined condition, where K≥1, and K is an integer, and the predetermined condition is any one of the following: the definition is greater than or equal to a first threshold, the definition is less than or equal to a second threshold, and the definition falls within a preset value range;
when K=1, use an image that meets the predetermined condition as the target image; when K>1, synthesize K images that meet the predetermined condition to generate the target image.

Optionally, when K=1, as shown in FIG. 5, the electronic device 4 further includes:
a mode acquiring unit 46, configured to acquire a refocusing mode, where the refocusing mode includes: a clear refocusing mode or a blurred refocusing mode, where the clear refocusing mode is configured to instruct the electronic device to generate the target image according to an image whose target area has highest definition among the at least two images, and the blurred refocusing mode is configured to instruct the electronic device to generate the target image according to an image whose target area has lowest definition among the at least two images;
where the generating unit 45 is specifically configured to generate the target image according to the refocusing mode and the definition of the target area in each of the at least two images.

Optionally, the determining unit 43 is specifically configured to:
use an area on which the instruction operation is performed as the target area; or
when an area on which the instruction operation is performed is a face area, use the face area as the target area; or
use an area in which a point is a center as the target area, where the point is in an area on which the instruction operation is performed.

Optionally, as shown in FIG. 5, the electronic device 4 further includes:
a depth-of-field range acquiring unit 47, configured to acquire a depth-of-field range that is issued by the user and of the to-be-photographed object;
where the image acquiring unit 41 is specifically configured to acquire, within the depth-of-field range, the at least two images that are of a to-be-photographed object and have different depths of field.

Optionally, the image acquiring unit 41 is further configured to collect in real time a reference image that includes the to-be-photographed object; and
the depth-of-field range acquiring unit 47 is specifically configured to acquire at least two focus points that are issued by the user and included in the reference image; and acquire a depth-of-field range that covers an object corresponding to the at least two focus points.

Optionally, as shown in FIG. 5, the electronic device 4 further includes:
a global registration unit 48, configured to perform global registration on the at least two images.

An electronic device provided in this embodiment of the present invention implements refocusing according to definition of a target area (that is, a refocusing area) in each of at least two images that are of a to-be-photographed object and have different depths of field. In this way, the electronic device may implement the refocusing without configuring multiple cameras or a laser/infrared measuring device, thereby reducing costs of implementing the refocusing, as compared with the prior art.

### Embodiment 4

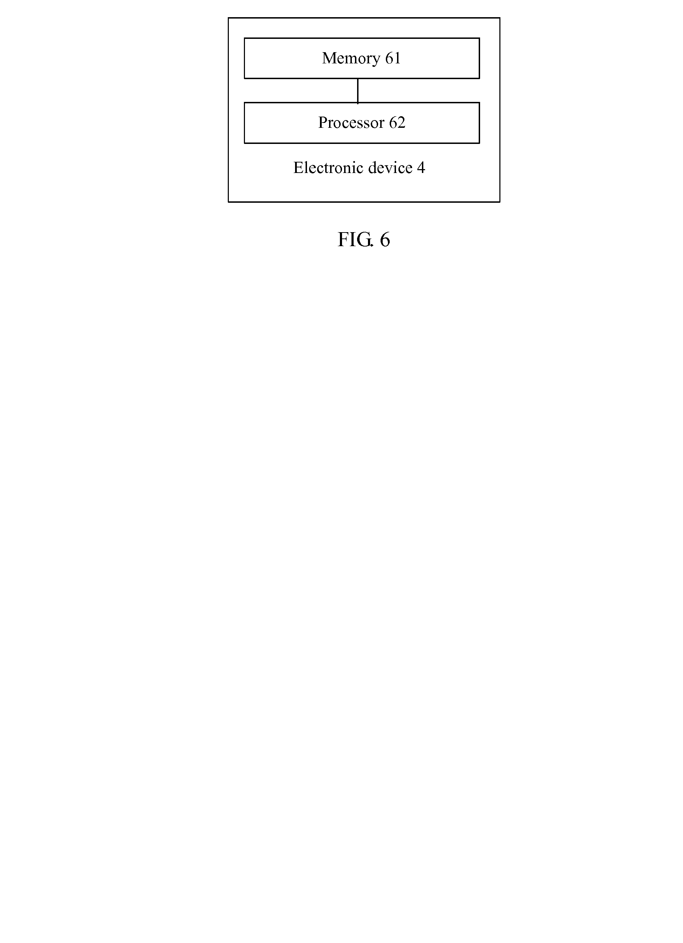

FIG. 6 shows an electronic device 6 for implementing refocusing according to an embodiment of the present invention, where the electronic device 6 is configured to execute the refocusing method shown in FIG. 1 and includes: a memory 61 and a processor 62.

The memory 61 is configured to store a group of code, and the code is used to control the processor 62 to perform the following actions:
acquire at least two images that are of a to-be-photographed object and have different depths of field;
acquire an instruction operation that is performed by a user on a partial area of one of the at least two images;
determine a target area according to the instruction operation;
acquire definition of the target area in each of the at least two images; and
generate a target image according to the definition of the target area in each of the at least two images.

Optionally, the processor 62 is specifically configured to:
acquire, from the at least two images, K images with the target area whose definition meets a predetermined condition, where K≥1, and K is an integer, and the predetermined condition is any one of the following: the definition is greater than or equal to a first threshold, the definition is less than or equal to a second threshold, and the definition falls within a preset value range;
when K=1, use an image that meets the predetermined condition as the target image; and when K>1, synthesize K images that meet the predetermined condition to generate the target image.

Optionally, when K=1, the processor 62 is further configured to acquire a refocusing mode, where the refocusing mode includes: a clear refocusing mode and a blurred refocusing mode, where the clear refocusing mode is configured to instruct the electronic device to generate the target image according to an image whose target area has highest definition among the at least two images, and the blurred refocusing mode is configured to instruct the electronic device to generate the target image according to an image whose target area has highest definition among the at least two images; and
the processor is specifically configured to generate the target image according to the refocusing mode and the definition of the target area in each of the at least two images.

Optionally, the processor 62 is specifically configured to:
use an area on which the instruction operation is performed as the target area; or
when an area on which the instruction operation is performed is a face area, use the face area as the target area; or
use an area in which a point is a center as the target area, where the point is in an area on which the instruction operation is performed.

Optionally, the processor 62 is further configured to acquire a depth-of-field range that is issued by the user and of the to-be-photographed object; and
the processor 62 is specifically configured to acquire, within the depth-of-field range, the at least two images that are of a to-be-photographed object and have different depths of field.

Optionally, the processor 62 is further configured to collect in real time a reference image that includes the to-be-photographed object; and
the processor 62 is specifically configured to acquire at least two focus points that are issued by the user and included in the reference image; and acquire a depth-of-field range that covers an object corresponding to the at least two focus points.

Optionally, the processor 62 is further configured to perform global registration on the at least two images.

An electronic device provided in this embodiment of the present invention implements refocusing according to definition of a target area (that is, a refocusing area) in each of at least two images that are of a to-be-photographed object and have different depths of field. In this way, the electronic device may implement the refocusing without configuring multiple cameras or a laser/infrared measuring device, thereby reducing costs of implementing the refocusing, as compared with the prior art.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) to perform a part of the steps of the methods described in the embodiments of the present invention. The foregoing storage medium includes: any medium that can store program code, such as a USB flash drive, a removable hard disk, a ROM (Read-Only Memory, read-only memory), a RAM (Random Access Memory, random access memory), a magnetic disk, or an optical disc.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A method for implementing refocusing, wherein the method is applied to an electronic device and comprises:
acquiring (101, 203) at least two images that are of a to-be-photographed object and have different depths of field;
acquiring (102, 206) an instruction operation that is performed by a user on a partial area of one of the at least two images;
determining (103, 207) a target area according to the instruction operation;
acquiring (104, 208) definition of the target area in each of the at least two images; and
generating (105, 210, 211) a target image according to the definition of the target area in each of the at least two images.

2. The method according to claim 1, wherein generating a target image according to the definition of the target area in each of the at least two images comprises:
acquiring, from the at least two images, K images with the target area whose definition meets a predetermined condition, wherein K≥1, and K is an integer, and the predetermined condition is any one of the following: the definition is greater than or equal to a first threshold, the definition is less than or equal to a second threshold, and the definition falls within a preset value range;
when K=1, using an image that meets the predetermined condition as the target image; and when K>1, synthesizing K images that meet the predetermined condition to generate the target image.

3. The method according to claim 2, when K=1, wherein before generating a target image according to the definition of the target area in each of the at least two images, the method further comprises:
acquiring a refocusing mode, wherein the refocusing mode comprises: a clear refocusing mode or a blurred refocusing mode, wherein the clear refocusing mode is configured to instruct the electronic device to generate the target image according to an image whose target area has highest definition among the at least two images, and the blurred refocusing mode is configured to instruct the electronic device to generate the target image according to an image whose target area has lowest definition among the at least two images;
wherein generating a target image according to the definition of the target area in each of the at least two images comprises:
generating the target image according to the refocusing mode and the definition of the target area in each of the at least two images.

4. The method according to any one of claims 1 to 3, wherein determining a target area according to the instruction operation comprises:
using an area on which the instruction operation is performed as the target area; or
when an area on which the instruction operation is performed is a face area, using the face area as the target area; or
using an area in which a point is a center as the target area, wherein the point is in an area on which the instruction operation is performed.

5. The method according to claim 1, wherein before acquiring at least two images that are of a to-be-photographed object and have different depths of field, the method further comprises:
acquiring a depth-of-field range that is issued by the user and of the to-be-photographed object;
wherein acquiring at least two images that are of a to-be-photographed object and have different depths of field comprises:
acquiring, within the depth-of-field range, the at least two images that are of a to-be-photographed object and have different depths of field.

6. The method according to claim 5, wherein before acquiring a depth-of-field range that is issued by the user and of the to-be-photographed object, the method further comprises:
collecting (201') in real time a reference image that comprises the to-be-photographed object;
wherein acquiring a depth-of-field range that is issued by the user and of the to-be-photographed object comprises:
acquiring at least two focus points that are issued by the user and comprised in the reference image; and
acquiring (202') a depth-of-field range that covers an object corresponding to the at least two focus points.

7. The method according to any one of claims 1 to 6, wherein before acquiring an instruction operation that is performed by a user on a partial area of one of the at least two images, the method further comprises:
performing (204) global registration on the at least two images.

8. An electronic device for implementing refocusing, comprising:
an image acquiring unit (41), configured to acquire at least two images that are of a to-be-photographed object and have different depths of field;
an instruction operation acquiring unit (42), configured to acquire an instruction operation that is performed by a user on a partial area of one of the at least two images;
a determining unit (43), configured to determine a target area according to the instruction operation;
a definition acquiring unit (44), configured to acquire definition of the target area in each of the at least two images; and
a generating unit (45), configured to generate a target image according to the definition of the target area in each of the at least two images.

9. The electronic device according to claim 8, wherein the generating unit (45) is configured to:
acquire, from the at least two images, K images with the target area whose definition meets a predetermined condition, wherein K≥1, and K is an integer, and the predetermined condition is any one of the following: the definition is greater than or equal to a first threshold, the definition is less than or equal to a second threshold, and the definition falls within a preset value range;
when K=1, use an image that meets the predetermined condition as the target image; and when K>1, synthesize K images that meet the predetermined condition to generate the target image.

10. The electronic device according to claim 9, when K=1, wherein the electronic device further comprises:
a mode acquiring unit (46), configured to acquire a refocusing mode, wherein the refocusing mode comprises: a clear refocusing mode or a blurred refocusing mode, wherein the clear refocusing mode is configured to instruct the electronic device to generate the target image according to an image whose target area has highest definition among the at least two images, and the blurred refocusing mode is configured to instruct the electronic device to generate the target image according to an image whose target area has lowest definition among the at least two images;
wherein the generating unit (45) is configured to generate the target image according to the refocusing mode and the definition of the target area in each of the at least two images.

11. The electronic device according to any one of claims 8 to 10, wherein the determining unit (43) is configured to:
use an area on which the instruction operation is performed as the target area; or
when an area on which the instruction operation is performed is a face area, use the face area as the target area; or
use an area in which a point is a center as the target area, wherein the point is in an area on which the instruction operation is performed.

12. The electronic device according to claim 8, wherein the electronic device further comprises:
a depth-of-field range acquiring unit (47), configured to acquire a depth-of-field range that is issued by the user and of the to-be-photographed object;
wherein the image acquiring unit (41) is configured to acquire, within the depth-of-field range, the at least two images that are of a to-be-photographed object and have different depths of field.

13. The electronic device according to claim 12, wherein:
the image acquiring unit (41) is further configured to collect in real time a reference image that comprises the to-be-photographed object; and
the depth-of-field range acquiring unit (47) is configured to acquire at least two focus points that are issued by the user and comprised in the reference image; and acquire a depth-of-field range that covers an object corresponding to the at least two focus points.

14. The electronic device according to any one of claims 8 to 13, wherein the electronic device further comprises:
a global registration unit (48), configured to perform global registration on the at least two images.
